# EUROPEAN PATENT APPLICATION

(11) **EP 2 051 163 A1**
(43) Date of publication of application: **22.04.2009**
(21) Application number: 07118686.0
(22) Date of filing: 17.10.2007
(51) Int. Cl.: G06F 9/445

(54) **Dynamic object model generation on client computer system**

(71) Applicant: SIEMENS AKTIENGESELLSCHAFT, 80333 München (DE)
(72) Inventor: Bürgel, Marcus, 90562 Heroldsberg (DE); Jachmann, Thomas, 90530 Wendelstein (DE); Linke, Stefan, 90475 Nürnberg (DE); Niederhuber, Peter, 1020 Wien (AT)

(57) **Abstract**

The present invention describes the generation of a dynamic object model at the installation time of a program at the client computer from the metadata files of the associated components of the said program. Here the object model is not treated as a single entity from the outset, but rather as a set of model parts. The generation is executed not at compile-time but at installation-time on the client computer. This allows us to create an object model that is specific to the combination of products and components that is currently installed on that computer, and yet have a single and internally consistent object model.

## Description

The present invention relates to the generation of object models, in particular generating a dynamic object model at installation time of a program or an application in a client computer system.

An object oriented application typically exposes one or more object models that can be used to interact with the application. An object model can be exposed for example to an external user to create application scripts, or to allow external applications to access data or functionality of the application. An object model can also be exposed to allow components within the application to interact with each other, or to allow components within the application to implement their functionality based on a defined object model. An application suite that consists of multiple products or components which can be installed optionally leads to a large variety of possible installation configurations in some of these object models.

For instance, if an application is having three components A, B and C then an external object model should cover all the functionality of components A, B, and C if all three components are installed. If however only A and B are installed, the external object model should cover only the functionality from A and B so that an external application is not mislead into programming against functionality provided by C.

Presently, Distinct Object Model is one way of implementing an object model wherein such an object model is defined completely at design-time and implemented not later than at compile-time. It means that the object model available to a client on a target computer must be exactly the same model that was available at compile-time. It is not possible to combine individual parts or aspects of a model that can be deployed individually into a consistent and integrated object model for the client. In such a scenario, the individual models must be separated and independent of each other. It is for instance not possible for one component to extend a function from another component with additional functions. The two components have to define two independent functions, each with their own additional functions. Any functional interconnection between those two components can only be described in documentation to a client.

A frequently used alternative is an object model that provides generic access mechanisms. This allows a client on the target computer uniform access to individual aspects of an object model that may have been deployed with different components. Here the access mechanism is by definition 'weakly-typed', that means that a compiler can perform no or only very limited type-checking, and the development environment cannot provide specific assistance to the developer. Also here the features must be evaluated at run-time.

It is an object of the present invention to generate a dynamic object model that is specific to the combination of products and components that is currently installed on a client computer, and yet have a single and internally consistent object model.

The above object is achieved by a method, implemented in a computer system for generating a dynamic object model at installation time of a program, comprising the steps of:
storing at least one metadata file corresponding to a first set of one or more components of the program in the computer system whereby the metadata files comprise of object model parts describing the components; and
generating the dynamic object model by merging metadata files comprising object model parts corresponding to a second set of one or more components already installed in the computer system and the metadata files corresponding to the first set of components.

The above object is achieved by a system for generating a dynamic object model at installation time of a program, comprising:
a means for storing at least one metadata file corresponding to a first set of one or more components of the program;
a module for generating the dynamic object model configured to merge metadata files corresponding to a second set of one or more components already installed in the system and the metadata files corresponding to the first set of one or more components; and
object model parts describing the first set of components and the second set of components.

The underlying idea of the present invention is the generation of a dynamic object model at the installation time of a program at the client computer from the metadata files of the associated components of the said program and the metadata of already installed components in the client. Here the object model is not treated as a single entity from the outset, but rather as a set of model parts. These parts are then merged in a later step. This merge can happen by adding new features (for example classes) or by extending existing model parts of the object model. Having a metadata format which is independent of source code for the generated classes has the additional benefit of making it simple to define the metadata format in a way that contains all the information needed for the generation process, which may have to include additional information for additional artefacts to be generated. The generation is executed not at compile-time but at installation-time on the client computer. This allows creating an object model that is specific to the combination of products and components that are currently installed on that computer, and yet having a single and internally consistent object model.

In a preferred embodiment, the said method of merging of the metadata files involves extending a first feature associated with a model part of a first component by adding at least one second feature where the second feature is defined in at least one component. The above feature facilitates in building inherent functional interconnections between the components of the program among themselves or between the components of the program and components that are currently installed in the client system providing a flexible model.

In a further preferred embodiment, merging of the metadata files involves creating the dynamic object model in case the second feature is not available with the first component. The above feature facilitates the creation of a new feature in the absence of the said feature from the metadata for effective functional interconnections of the components.

In an alternative embodiment, the method further comprises the step of re-generating the dynamic object model at the computer system by prior usage scenarios. The above feature facilitates in building more efficient access mechanism, optimized for the specific scenarios that are most frequently used on the specific computer system.

In an alternative embodiment, the module for generating the dynamic object model further comprises a first generator configured to generate an intermediate code whereby the said intermediate code is further converted to the dynamic object model by a second generator. The above feature facilitates in generating intermediate code that is then compiled in a second step into executable code. Here it is possible to provide a system (even platform independent) solution, which relies on platform specific compilers for the second step.

In an alternative embodiment, the first generator and the second generator are adapted to receive at least one feature as input that is spread over more than one object model parts. The above feature facilitates the reception of metadata of the object model parts by the compilers for the generation of a deeply integrated and flexible dynamic object model.

In an alternative embodiment, the step of generating the dynamic object model is further extended by creating at least one additional artifact based on the metadata files. The above feature facilitates the creation of additional artifacts using the metadata for example the generation of user documentation that describes the content of the object model, or the generation of an XML Schema that defines the XML-Format based on the object model.

The present invention is further described hereinafter with reference to illustrated embodiments shown in the accompanying drawings, in which:
FIG 1 is a diagram showing the dynamic object model generation on client computer,
FIG 2 is a diagram showing the mechanism of extending an existing function definition in a component by another component,
FIG 3 is a diagram showing the generation of dynamic object model that contains a function defined in two separate metadata files,
FIG 4 is a diagram showing the dynamic object model generation in a two step process, and
FIG 5 is a diagram showing the generation of additional artifacts generated during dynamic object model generation.

Before describing the method of object detection, some of the terminology used herein will be explained. A 'component' is a product or an element in a program or in an application suite which can be installed optionally leading to a large variety of possible installation configurations. Further, a 'feature' defines the abstract characteristics of an object in an object oriented programming. For example feature of the object can be classes, interfaces, attributes, fields, relations, properties, methods etc.

The techniques described hereinafter explain the generation of a dynamic object model even if each client computer may have an individual combination of products and/or components installed. Here the number of possible combinations quickly becomes prohibitively large to provide all possible object model variants on an installation medium like a compact disk. This becomes even more critical when different versions of individual components may be combined. The present invention gives a solution by deploying not the object model on the installation medium, but instead deploy the metadata of the components, and run the model generation on the client computer. Specifically this means that each product or component brings its part of model definition. During installation these metadata is put into a location on the client system and the generator module is executed. Previous installations of related products have put their metadata in the same location, so that the generator reads the metadata from all components that are currently installed and can create a model that corresponds to the current combination of products.

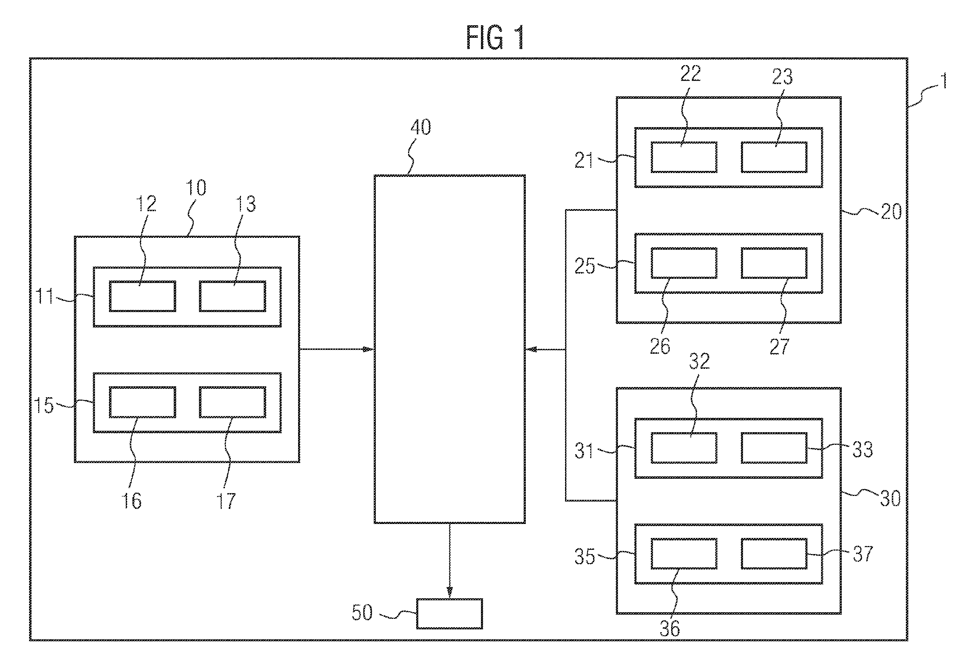

FIG 1 is a diagram showing the dynamic object model generation on a client computer. The generation of the object model is carried out in a client computer at installation time of a program. The said program is stored initially in a storage medium 1 of the client computer. The said program consists of at least one component which has to be installed to generate an object model. For illustration it is assumed here that the said program is having only one component 10. Here the component is defined using at least one metadata file and the said metadata files logically consist of at least one object model part.

The object model is not treated as a single entity from the outset, but rather as a set of model parts. These parts are then merged in a later step. This merge can happen by adding new features to the model parts or by extending existing features of the model parts. This has the advantage that the consumer of the object model (e.g. the external application programmer) sees a consistent and unified object model, but the creators (designers and implementers) of the model can concentrate on their respective parts.

Here the component 10 is assumed to have plurality of metadata files. For illustration it is assumed that the component has two metadata files each logically divided into two model parts, but in practice there is no limitation for the number of metadata files or for the number of object model parts. The first metadata file 11 logically comprises of object model parts, say part one 12 and part two 13. The second metadata file 15 comprises of object model parts, say part one 16 and part two 17.

A couple of components are assumed to be installed previously in the client computer. A first component 20 having a corresponding first metadata file 21 comprising of object model part one 22 and part two 23 and a second metadata file 25 of the same component having first object model part 26 and second part 27. The second component 30 installed in the client computer has corresponding first metadata file 31 comprising of first model part 32 and second model part 33. The second metadata file 35 of the same component 30 has a first object model part 36 and a second model part 37.

The model generation is typically done at the time of the installation of the program in the client computer. A module for generating the dynamic object model 40 is configured to merge metadata files corresponding to already installed component 20 and component 30 in the client computer and the metadata files corresponding to the program component 10 resulting in a dynamic object model 50.

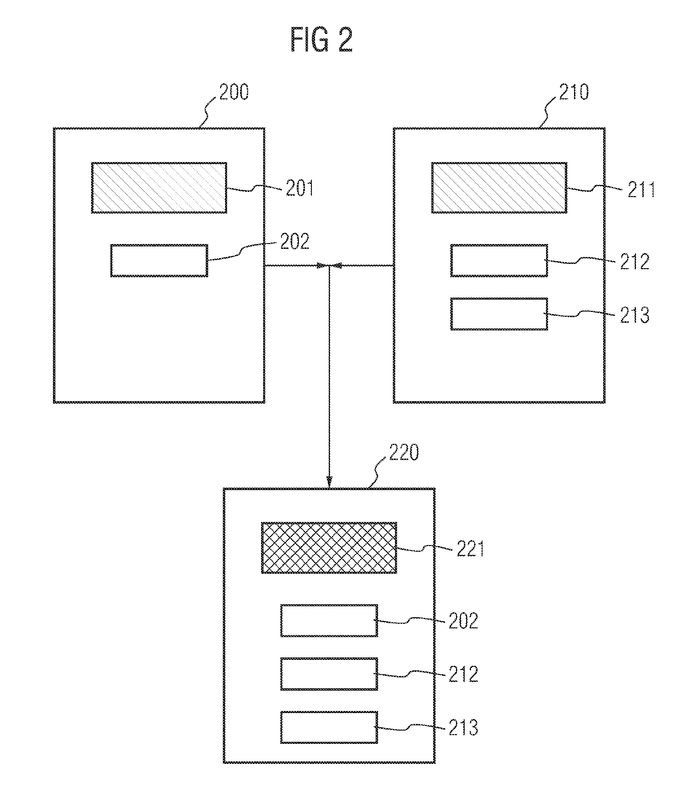

FIG 2 is a diagram showing the mechanism of extending an existing function definition in a component by another component. The component A, 200 is assumed to have two functions. Class A, 201 and an attribute B, 202 are the associated functions of the component A. Another component B, 210 comprises of the same function class A, 211 but having two new attributes, attribute C, 212 and attribute D, 213. During generation of the object model the two components can be merged together. Here the component B extends an existing class A that was defined in a different component i.e. component A, and adds two additional functions, attribute C and attribute D. Hence a new object model 220 is generated by merging the features of the component A and component B. Here class A, 221 defines an extended class obtained by the merging of the component A and component B. The new merged model 220 comprises of the attributes B, 202 defined in component 200 and attribute C, 212 and attribute D, 213 defined in component B forming an extended class A, 221.

Merging of the metadata files involves extending a first feature associated with a model part of a component by adding at least one second feature where the second feature is defined in at least one of the components. Merging of the metadata files also involves creating the second feature associated with the model part of a component in case the said second feature is not available with the component.

A sample program is shown here which illustrates the working of the above said example. The first fragment defines a function, class A which has another function attribute B.

```
   <Class name="A" hidden="false" type="Interna1A"
   assembly="ComponentA.d11">
      <Description>Sample Class A</Description>
      <Attributes>
         <Attribute name="B" type="System.Boolean"
  hidden="false" access="read">
            <Description>Sample Attribute B</Description>
            <InternalAttribute
   name="ComponentA.ClassA.InternalB"/>
         </Attribute>
      </Atributes>
   </Class>
```

In the example, the above fragment would be deployed with Component A. If only Component A is installed on a client computer, then the class A with only the attribute B would be generated and could be used by clients of that object model (e.g. a script author).

The second fragment extends that existing class A with additional attributes C and D:

```
   <Class name="A" extension="true">
      <Description>Extension for Class A</Description>
      <Attributes>
         <Attribute name="C" type="System.Int32"
  hidden="false" access="readwrite">
            <Description>Sample Attribute C</Description>
            <InternalAttribute
   name="ComponentB.ClassA.InternalC"/>
         </Attribute>
         <Attribute name="D" type="System.String"
  hidden="false" access="readwrite">
            <Description>Sample Attribute D</Description>
            <InternalAttribute
   name="ComponentB.ClassA.SomeD"/>
         </Attribute>
      </Atributes>
   </Class>
```

Such a fragment would be deployed with Component B. In this example Component B can only be installed on a computer where Component A is already present (or is being installed together with Component B). In this case, both metadata fragments will be combined by the Model Generation step, and a class A will be generated that contains attributes B, C and D. Note that existing clients of Component A will continue to work, even though they are not aware that C and D exists, as long as B is available. Clients that are aware of C and D can access all attributes seamlessly, without having to be aware of which attributes were originally associated with Component A or Component B.

The merge can happen on various levels. For example the said process of merge can involve merging new interfaces, new methods, new properties or new relations into a class or creating a new one if such a class doesn't exist so far.

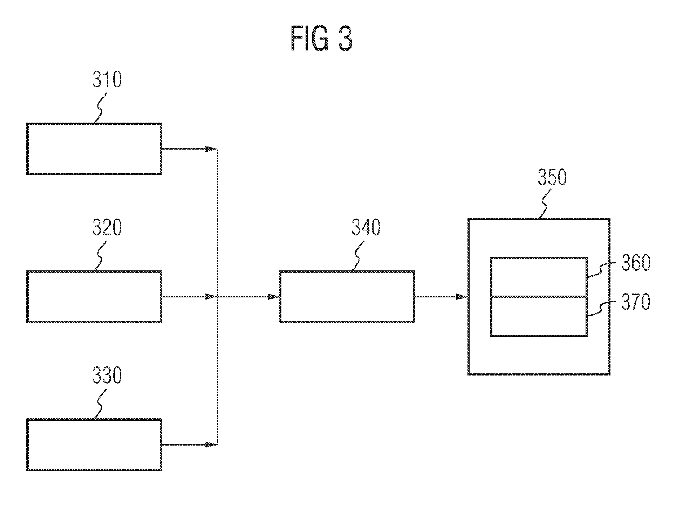

FIG 3 is a diagram showing the generation of dynamic object model that contains functions defined in two separate metadata files. 310 and 320 represents metadata files where features, class A and class B are defined respectively. 330 represents another feature, class A(Ex) which is defined in another metadata file and can be seen as an extension of class A and can be integrated along with class A to extend the functionality of the said class A. 340 represents a generating module which merges the required features to form a dynamic object model. Block 350 shows a dynamic object model generated by the said generating module 340. This model includes the merged feature say class A' 360 which is obtained by extending class A by adding class A(Ex) and represented here as follows (class A + class (Ex)). Also the said model consists of class B, 370. In this scenario the features of the object model parts are defined in separate metadata files.

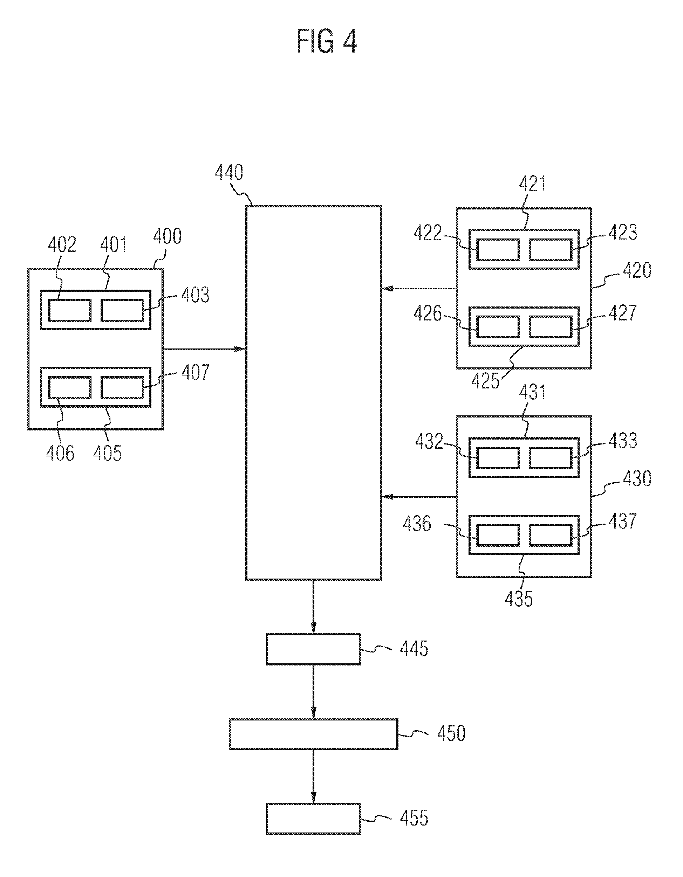

FIG 4 is a diagram showing the dynamic object model generation in a two step process. The generation of the object model is carried out in a client computer at installation time of a program. The said program is stored initially in a storage medium of the client computer. The said program consists of at least one component which has to be installed to generate an object model. But for illustration it is assumed here that the said program is having only one component 400. Here the component is defined using plurality of metadata files and the said metadata file consists of plurality of object model parts.

Here the component 400 is assumed to have plurality of metadata files. For illustration it is assumed that the component has two metadata files each logically divided into two model parts. The first metadata file 401 comprising of object model parts say part one 402 and part two 403. The second metadata file 405 comprises of object model parts, say part one 406 and part two 407.

A couple of components are assumed to be installed previously in the client computer. A first component 420 comprises of corresponding first metadata file 421 having a first object model part 422 and a second object model part 423. The same component 420 comprises of a second metadata file 425 having first object model part 426 and a second model part 427. A second component 430 also is assumed to be installed in the client computer having corresponding metadata file 431 comprising of first object model part 432 and a second object model part433. A second metadata file 435 of the same component 430 comprises of a first object model part 436 and a second object model part 437.

The model generation is typically done at the time of the installation of the program in the client computer. A module for generating the dynamic object model is configured to merge metadata files corresponding to a set of components already installed in the computer system (i.e. component 420 and 430 and the metadata files corresponding to the program component 400 resulting in a dynamic object model 455. Here the module for generating the dynamic object model consists of two different generators. The first generator 440 and the second specific generator 450 are adapted to receive at least one feature as input that is spread over at least one object model part. The first generator is configured to generate intermediate code 445 whereby the said intermediate code may be further converted by a platform specific second generator 450 to an executable code 455 which forms the dynamic object model.

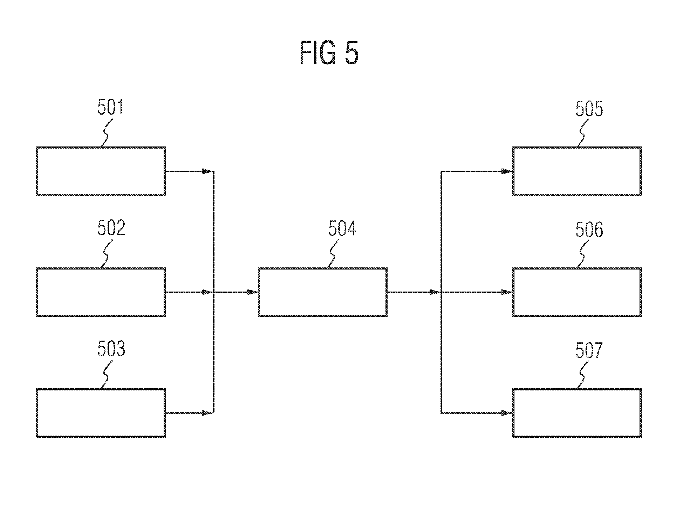

FIG 5 is a diagram showing the generation of additional artifacts generated during dynamic object model generation. 501, 502 and 503 represent metadata files. 504 represents a generating module which merges the required features of the metadata files to form a dynamic object model 506. In this scenario the features of the object model parts are defined in separate metadata files. The fact that the object model is generated from metadata has the additional benefit that it is possible to extend the generator to also create additional artefacts based on the same metadata. Examples for this are the generation of user documentation 505 that describes the content of the object model, or the generation of an XML Schema 507 that defines the XML-Format based on the object model. If additional information is required for these tasks (e.g. descriptive text for the user documentation) the metadata format can simply be extended correspondingly.

The object model generation is separated as an independent step, separated both from compile-time of the product before deployment and from run-time. This allows the potential of further optimizations. One example is that the generated code might inspect its usage-scenarios, and in a later additional generation-step create an even more efficient access mechanism, optimized for the specific scenarios that are most frequently used on a specific client. This could happen completely isolated from the client itself, because the interface to the object model does not have to change.

In this methodology re-generating the dynamic object model at the computer system by inspecting usage scenarios is possible. Normally the object model that is available for an application or e.g. a script author on a client computer is fixed because it has been created during product development and deployed together with the application. Therefore it is difficult to adapt the object model to specific requirements of a specific installation.

When the object model is generated on the client computer, it is always possible to re-generate the object model in a way that the interface of the model is unchanged so that the client, for example the user of the model is not affected, but the implementation of the model can be tailored to specific needs.

Few of the possible scenarios could be
(a) The addition of code that outputs additional diagnostic information about the object model, or
(b) Code that assembles usage information (e.g. which methods or properties of the model are called how often, or in which order).

Based on such usage information it would then be conceivable to optimize the implementation in a later generation step.
o For example if the usage information shows that after Object A the user always accesses Object B next, it could be possible to pre-load B together with A, so that it is already in memory when B will be accessed later.
○ If on the other hand on another computer the usage information shows that the access to Object A and Object B are not related (on that computer), then B would only be loaded in memory when it actually is accessed.
○ Over time this could result in object models that have the same interface and the same functionality on each client computer, but whose implementation would be optimized differently on each computer, depending on the access pattern on that particular computer.

The key here is the fact that the mechanisms to generate the object model are available on the client computer because that is where the generation takes place during installation, and therefore can be used whenever appropriate without impacting the clients of that object model. The code can also be optimized for a very specific hardware the client uses (for example available memory, number of processors, etc.). If anything related to the hardware changes, the generation could be done again.

Summarizing, the present invention describes the generation of a dynamic object model at the installation time of a program at the client computer from the metadata files of the associated components of the said program. Here the object model is not treated as a single entity from the outset, but rather as a set of model parts. The generation is executed not at compile-time but at installation-time on the client computer. This allows us to create an object model that is specific to the combination of products and components that is currently installed on that computer, and yet have a single and internally consistent object model.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A method, implemented in a computer system for generating a dynamic object model (50) at installation time of a program, comprising the steps of:
storing at least one metadata file (11, 15) corresponding to a first set of one or more components (10) of the program in the computer system whereby the metadata files comprise of object model parts (12, 13, 16, 17) describing the components; and
generating the dynamic object model (50) by merging metadata files (21, 25, 31, 35) comprising object model parts (22, 23, 26, 27, 32, 33, 36, 37) corresponding to a second set of one or more components (20, 30) already installed in the computer system and the metadata files (11, 15) corresponding to the first set of components (10).

2. The method according to claim 1, wherein merging of the metadata files involves extending a first feature (211) associated with a model part of a first component (210) by adding at least one second feature (201) where the second feature is defined in at least one component.

3. The method according to claim 1 or 2, wherein merging of the metadata files involves creating the dynamic object model (220) in case the second feature (201) is not available with the first component (210).

4. The method according to claim 1 further comprising the step of re-generating the dynamic object model (50) at the computer system by prior usage scenarios.

5. A system for generating a dynamic object model (50) at installation time of a program, comprising:
a means (1) for storing at least one metadata file (11, 15) corresponding to a first set of one or more components (10) of the program;
a module (40) for generating the dynamic object model (50) configured to merge metadata files (21, 25, 31, 35) corresponding to a second set of one or more components (20, 30) already installed in the system and the metadata files (11, 15) corresponding to the first set of one or more components (10); and
object model parts (12, 13, 16, 17, 22, 23, 26, 27, 32, 33, 36, 37) describing the first set of components (10) and the second set of components (20, 30).

6. The system according to claim 6, wherein the module (40) for generating the dynamic object model (455) further comprises a first generator (440) configured to generate an intermediate code (445) whereby the said intermediate code is further converted to the dynamic object model (455) by a second generator (450).

7. The system according to claim 6, wherein the first generator (440) and the second generator (450) are adapted to receive at least one feature as input that is spread over more than one object model parts.

8. The system according to claim 5-7, further comprising at least one additional artifact (505, 507) created based on the metadata files.
